# EUROPÄISCHE PATENTSCHRIFT

(11) **EP 1 151 411 B1**
(45) Veröffentlichungstag und Bekanntmachung des Hinweises auf die Patenterteilung: **27.11.2002**
(21) Anmeldenummer: 00902610.5
(22) Anmeldetag: 18.01.2000
(51) Int. Cl.: G06K 19/077

(54) **TRAGBARER DATENTRÄGER MIT AUSBRECHBARER MINICHIPKARTE**
PORTABLE DATA SUPPORT WITH A BREAK-OFF MINI-CHIP CARD
SUPPORT DE DONNEES PORTATIF A MINI-CARTE A PUCE DECOUPABLE

(30) Priorität: 19.01.1999 DE 19901965
(43) Veröffentlichungstag der Anmeldung: 07.11.2001
(73) Patentinhaber: Giesecke & Devrient GmbH, 81677 München (DE)
(72) Erfinder: VEDDER, Klaus, D-80801 München (DE); BARAK, Renée-Lucia, D-82008 Unterhaching (DE)
(74) Vertreter: Klunker . Schmitt-Nilson . Hirsch
(86) Internationale Anmeldenummer: EP0000366
(87) Internationale Veröffentlichungsnummer: WO00043950

(56) Entgegenhaltungen:
- EP-A- 0 495 216
- EP-A- 0 535 436
- DE-A- 4 007 221
- DE-C- 19 726 203

## Beschreibung

Die vorliegende Erfindung betrifft einen tragbaren Datenträger mit einer ausbrechbaren Minichipkarte gemäß dem Oberbegriff des Anspruchs 1.

In bekannten Mobilfunksystemen, beispielsweise einem GSM-Mobilfunksystem kann das SIM (subscriber identity module) in zwei verschiedenen Kartenformaten vorliegen. Mobiltelefone, bei denen ein häufigerer Wechsel des SIM vorgesehen ist, verwenden üblicherweise das Kartenformat ID-1, da hierbei durch die große Karte die Handhabung bei einem Wechsel vereinfacht wird. Für Mobiltelefone, bei denen ein Wechsel des SIM nur selten oder gar nicht vorgesehen ist, oder bei sehr kleinen Mobiltelefonen, hat sich das sogenannte Plug-In-SIM im ID-000-Format durchgesetzt. Um die Bereitstellung von im wesentlichen vorpersonalisierten Chipkarten für den Mobilfunkeinsatz zu erleichtern, werden die Chipkarten für den Mobilfunkbereich in der Regel mit einer Stanzung versehen, welche das Herausbrechen des Plug-In (Minichipkarte) ohne größere Umstände ermöglicht.

Aus der deutschen Offenlegungsschrift DE-A- 40 07 221 bzw. der europäischen Offenlegungsschrift EP-A-0 535 436 ist es bekannt, eine Minichipkarte im Format ID-000 in einer Karte mit dem Standardformat ID-1 anzuordnen, wobei die Minichipkarte von einer Stanzung, d.h. einem Freischnitt umgeben ist, bei der lediglich ein oder mehrere Stege erhalten bleiben, die die Minichipkarte im Kartenkörper halten.

Aus der europäischen Patentanmeldung EP-A-0 495 216 ist weiterhin eine Ausweiskarte mit Mikroprozessor bekannt, bei der auf einer Standard-Chipkarte (Format ID-1) an der durch die Norm festgelegten Stelle ein Mikroprozessor mit seinen Kontaktflächen angeordnet ist. Der Mikroprozessor sowie seine Kontaktflächen sind von einem Freischnitt in Form eines Plug-In (Minichipkarte im ID-000-Format) dreiseitig umgeben, während die vierte Seite des Trägers eine scharnierartige Kerbung aufweist.

Auf diese Weise wird es ermöglicht, daß bei nicht herausgebrochenem Plug-In die Standardkarte in den Mobilfunkgeräten verwendet werden kann, welche einen öfteren Wechsel des SIM vorsehen, während bei kleineren Mobilfunkgeräten bzw. Geräten, bei denen ein Wechsel des SIM üblicherweise nicht vorgesehen ist, das herausbrechbare Plug-In als "Minichipkarte" verwendet wird.

Mit zunehmender Miniaturisierung der Mobilfunkgeräte stellt sich jedoch das Problem, daß auch die Minichipkarte im Format ID-000 noch zu groß ist.

Es ist deshalb Aufgabe der Erfindung, eine Chipkarte mit Plug-In anzugeben, welche eine nochmalige Verkleinerung der Minichipkarte zuläßt, wobei alle Kartenformate zuverlässig voneinander trennbar sind bzw. bei der ein einfaches Entfernen des Plug-In vom restlichen Kartenkörper ermöglicht wird, wobei gleichzeitig für den Fall, daß das Plug-In im restlichen Kartenkörper verbleibt, Plug-In und Kartenkörper eine stabile Einheit bilden.

Diese Aufgabe wird ausgehend von den Merkmalen des Oberbegriffs des Anspruchs 1 durch die kennzeichnenden Merkmale des Anspruchs 1 gelöst.

Vorteilhafte Ausgestaltungen der Erfindung sind in den abhängigen Ansprüchen angegeben.

Der Grundgedanke der Erfindung besteht darin, daß das Plug-In im Format ID-000 eine Sollbruchstelle enthält, die durch Entfernen eines Teils des Plug-In eine weitere Miniaturisierung der Minichipkarte zuläßt Diese zusätzliche Sollbruchlinie kann durch eine Einkerbung, einen Freischnitt mit Stegen; usw. realisiert sein.

In vorteilhafter Weise ist diese Sollbruchlinie durch eine Perforation realisiert. Die Perforation stellt eine gegenüber einer Einkerbung stabilere Verbindung dar, so daß aus der Karte im ID-1-Format das Plug-In im ID-000-Format ausgebrochen werden kann, ohne daß die Sollbruchlinie für die weitere Miniaturisierung bricht.

Im folgenden wird die Erfindung an Hand der Figuren 1 bis 2 näher erläutert.
Es zeigen:
- Fig. 1: eine Karte mit Sollbruchlinie im Plug-In,
- Fig. 2: eine Karte mit zwei Sollbruchlinien für verschieden große Plug-Ins

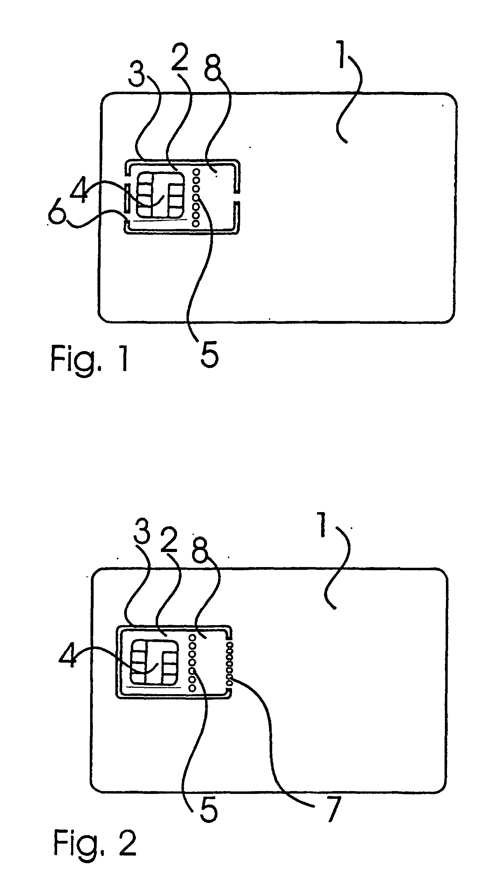

In Figur 1 ist ein Kartenkörper 1 mit einem Plug-In 2, welches einen integrierten Schaltkreis und eine Kontaktfläche 4 enthält, dargestellt Die Kontur des Plug-In 2 ist durch einen Freischnitt bzw. eine Ausstanzung 3 innerhalb des übrigen Kartenkörpers 1 definiert und lediglich über einen oder mehrere Stege 6 mit diesem verbunden. Die Stege 6 sind so ausgeführt, daß ein leichtes Ausbrechen des Plug-In 2 aus dem Kartenkörper 1 möglich ist. Innerhalb des Plug-In ist weiterhin eine Sollbruchlinie in Form einer Perforationslinie 5 angeordnet, welche eine weitere Verkleinerung des Plug-In durch Abbrechen des Reststückes 8 erlaubt. Die Perforation 5 stellt eine stabilere Verbindung dar als die Verbindungsstege 6, so daß beim Ausbrechen des Plug-In 2 im Format ID-000 aus dem Kartenkörper 1 die Perforation 5 nicht bricht. Nach dern Ausbrechen des Plug-In kann durch ein Knicken an der Perforationslinie 5 eine nochmalige Verkleinerung der Minichipkarte erreicht werden.

In Figur 2 ist eine Chipkarte ähnlich der Fig. 1 dargestellt, wobei das Plug-In 2 im Format ID-000 dreiseitig durch den Freischnitt 3 vom restlichen Kartenkörper 1 getrennt ist und lediglich mittels der Perforationslinie 7 eine Verbindung zum restlichen Kartenkörper an der vierten Seite besteht. Die Perforation 7 weist kleinere Perforationslöcher und einen geringeren Abstand der Löcher zueinander auf, so daß bei Druck auf das Plug-In diese Perforationslinie 7 vor der Perforationslinie 5 bricht.

Die Größe und Dichte der Perforationen 7 ist von der gewünschten Stabilität der fertiggestellten Karte abhängig. In vorteilhafter Weise reicht der Freischnitt 3 um die Ecken zur vierten Seite und die Perforation 7 ergibt eine gerade Linie, um ein Herausbrechen der Minichipkarte 2 zu vereinfachen.

Diese Verbindung des Plug-In 2 zum restlichen Kartenkörper 1 weist eine gegenüber dem Stand der Technik höhere Stabilität auf. Wenn auf das Plug-In 2 ein leichter Druck ausgeübt wird, führt dies nicht zu einer Lageveränderung des Plug-In in Bezug auf die Oberfläche des restlichen Kartenkörpers 1, da die Verbindung zum Kartenkörper 1 über die ganze Dicke des Kartenkörpers besteht. Trotzdem wird durch die Perforationen 7 eine Sollbruchlinie erzeugt, die bei festerem Drücken zum Ausbrechen des Plug-In führt. Im wesentlichen führt die erfindungsgemäße Lösung zu zwei stabilen Zuständen. Im ersten ist das Plug-In in fester Lage zum restlichen Kartenkörper angeordnet, während im zweiten Zustand das Plug-In ausgebrochen ist.

## Patentansprüche

1. Tragbarer Datenträger (1) mit einer ausbrechbaren Minichipkarte (2), wobei die Minichipkarte (2) durch einen Freischnitt (3), der den größten Teil der Minichipkarte umgibt, vom restlichen Kartenkörper weitgehend getrennt ist, **dadurch gekennzeichnet, daß** innerhalb der Minichipkarte (2) eine Sollbruchlinie (5) zur weiteren Verkleinerung der Minichipkarte (2) angeordnet ist.

2. Tragbarer Datenträger nach Anspruch 1, **dadurch gekennzeichnet, daß** sich der Freischnitt (3) über drei Seiten der Minichipkarte erstreckt und eine vierte Seite eine Perforation (7) aufweist.

3. Tragbarer Datenträger nach Anspruch 2, **dadurch gekennzeichnet, daß** der Freischnitt (3) um die Ecken zur vierten Seite reicht und die Perforation (7) eine gerade Linie ergibt.

4. Tragbarer Datenträger nach Anspruch 2 oder 3, **dadurch gekennzeichnet, daß** innerhalb der Minichipkarte (2) eine Sollbruchlinie (5) zur weiteren Verkleinerung der Minichipkarte (2) angeordnet ist.

5. Tragbarer Datenträger nach einem der Ansprüche 1 bis 4, **dadurch gekennzeichnet, daß** die Sollbruchlinie (5) aus einer Perforationslinie gebildet ist.

6. Tragbarer Datenträger nach Anspruch 4 oder 5, **dadurch gekennzeichnet, daß** die Sollbruchlinie (5) eine höhere Festigkeit aufweist als die Perforation (7).

7. Tragbarer Datenträger nach einem der Ansprüche 4 bis 6, **dadurch gekennzeichnet, daß** zur zusätzlichen Stabilisierung der Lage der Minichipkarte (2) im Kartenkörper (1) vorzugsweise an der der Sollbruchlinie (5) gegenüberliegenden Seite eine stegförmige Verbindung angeordnet ist.

## Claims

1. A portable data carrier (1) with a break-out mini smart card (2), the mini smart card (2) being largely separated from the remaining card body by a free punch (3) surrounding most of the mini smart card, **characterized in that** a rated breaking line (5) is disposed within the mini smart card (2) for further reducing the size of the mini smart card (2).

2. A portable data carrier according to claim 1, **characterized in that** the free punch (3) extends over three sides of the mini smart card and a fourth side has a perforation (7).

3. A portable data carrier according to claim 2, **characterized in that** the free punch (3) extends around the corners of the fourth side and the perforation (7) yields a straight line.

4. A portable data carrier according to claim 2 or 3, **characterized in that** a rated breaking line (5) is disposed within the mini smart card (2) for further reducing the size of the mini smart card (2).

5. A portable data carrier according to any of claims 1 to 4, **characterized in that** the rated breaking line (5) is formed by a perforated line.

6. A portable data carrier according to claim 4 or 5, **characterized in that** the rated breaking line (5) has higher strength than the perforation (7).

7. A portable data carrier according to any of claims 4 to 6, **characterized in that** a bar-shaped connection is preferably disposed on the side opposite the perforation (5) for additionally stabilizing the position of the mini smart card (2) in the card body (1).

## Revendications

1. Support de données (1) portatif avec une minicarte à puce (2) séparable par déchirement, la minicarte à puce (2) étant notablement séparée du reste du corps de carte par une découpe libre (3) qui entoure la plus grande partie de la minicarte à puce, **caractérisé en ce qu'**à l'intérieur de la minicarte à puce (2) est disposée une ligne destinée à la rupture (5), servant à la poursuite de la fragmentation de la minicarte à puce (2).

2. Support de données portatif selon la revendication 1, **caractérisé en ce que** la découpure libre (3) s'étend sur trois côtés de la minicarte à puce et un quatrième côté présente une perforation (7).

3. Support de données portatif selon la revendication 2, **caractérisé en ce que** la découpure libre (3) passe autour des angles allant au quatrième côté, et la perforation (7) donne une ligne droite.

4. Support de données portatif selon la revendication 2 ou 3, **caractérisé en ce qu'**une ligne destinée à la rupture (5), servant à continuer la fragmentation de la minicarte à puce (2), est disposée à l'intérieur de cette minicarte à puce (2).

5. Support de données portatif selon l'une des revendications 1 à 4, **caractérisé en ce que** la ligne destinée à la rupture (5) est formée d'une ligne de perforation.

6. Support de données portatif selon la revendication 4 ou 5, **caractérisé en ce que** la ligne destinée à la rupture (5) présente une résistance supérieure à celle de la perforation (7).

7. Support de données portatif selon l'une des revendications 4 à 6, **caractérisé en ce qu'**une liaison en forme de nervure est disposée dans le corps de carte (1), de préférence sur le côté opposé à la ligne destinée à la rupture (5), dans le but de donner une stabilisation supplémentaire à la position de la minicarte à puce (2) dans le corps de carte (1).
